(19) Europäisches Patentamt
European Patent Office
Office européen des brevets

(11) Publication number: **0 375 576 A1**

(12) **EUROPEAN PATENT APPLICATION**

(21) Application number: 89420509.5

(22) Date of filing: 20.12.89

(51) Int. Cl.5: C07F 9/50, C07F 9/92, C07F 9/94, C07F 9/74

(30) Priority: 22.12.88 US 288508

(43) Date of publication of application: 27.06.90 Bulletin 90/26

(84) Designated Contracting States: ES GR

(71) Applicant: EASTMAN KODAK COMPANY
343 State Street
Rochester, New York 14650(US)

(72) Inventor: Puckette, Thomas Allen c/o Eastman Kodak Company
Patent Department 343 State Street
Rochester New York 14650(US)
Inventor: Stavinoha, Jerome Leonard c/o Eastman Kodak Compan
Patent Department 343 State Street
Rochester New York 14650(US)
Inventor: Devon, Thomas James c/o Eastman Kodak Compan
Patent Department 343 State Street
Rochester New York 14650(US)
Inventor: Phillips, Gerald Wayne c/o Eastman Kodak Compan
Patent Department 343 State Street
Rochester New York 14650(US)

(74) Representative: Parent, Yves et al
Kodak-Pathé Département Brevets et Licences CRT 60/1 -Zone Industrielle
F-71102 Chalon-sur-Saône Cédex(FR)

# (54) Preparation of bidentate ligands.

(57) A process is disclosed for preparing bidentate ligands of the formula:

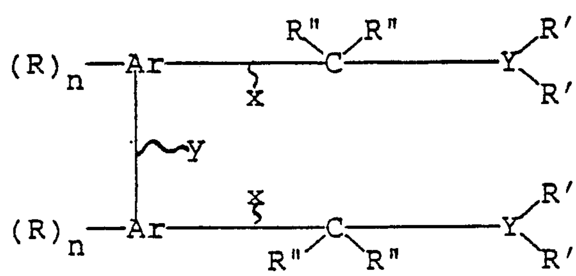

wherein:
each of Ar, R′, R″ and Y are specifically defined species;
the x bonds and the y bonds are attached to adjacent carbon atoms on the ring structures; and
n is a whole number in the range of 0-4 where Ar is phenyl: 0-6 where Ar is naphthyl: and 0-8 where Ar is phenanthryl or anthracenyl.
The invention process comprises

a. reductively coupling an ortho-substituted aromatic moiety to produce a biphenyl compound;
b. contacting the biphenyl compound produced in Step (a) with an anion having the structure:

EP 0 375 576 A1

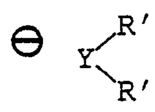 or 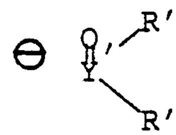

wherein Y, $Y'$ and $R'$ are specifically defined species;
under conditions appropriate to form said bidentate ligand or the dioxide precursor thereof; and

c. optionally reducing the intermediate product when the oxy-anion,

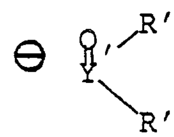

is employed as the anion in Step (b).

# PREPARATION OF BIDENTATE LIGANDS

This invention relates to the preparation of bidentate ligands which are useful, for example, in the formation of low pressure hydroformylation catalysts.

## BACKGROUND OF THE INVENTION

Bidentate ligands have recently been shown to be very effective for the preparation of organometallic catalysts, such as for example, low pressure hydroformylation catalysts wherein the bidentate ligands are coordinated with rhodium. While a variety of bidentate ligands are useful for such chemical conversions as hydroformylation, their synthesis is often difficult, involving numerous reaction steps, one or more of which give low product yields. The net result is that the target bidentate ligands are obtained in low overall yields and are expensive to prepare.

In order for bidentate ligands such as:

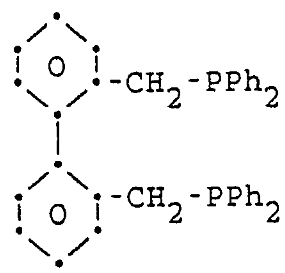

to come into more widespread use, efficient means for the preparation of such bidentate ligands will need to be developed.

## OBJECTS OF THE INVENTION

It is, therefore, an object of the present invention to develop improved methods for the preparation of bis(dihydrocarbylphosphinomethyl)biaryl-type bidentate ligands.

This and other objects will become apparent from inspection of the detailed description and claims which follow.

## STATEMENT OF THE INVENTION

In accordance with the present invention, we have discovered that bis(dihydrocarbylphosphinomethyl)-biaryl-type compounds can be prepared from specifically defined ortho.substituted aromatic compounds by a simple procedure, which involves first, the reductive coupling of the orthosubstituted aromatic compounds to form a bis[(substituted alkyl) substituted] biaryl compound, which is optionally treated to activate the benzylic carbon towards nucleophilic displacement, which is then converted to the desired bidentate ligand by reaction of the resulting biaryl compound with the anion of a Group V compound of specified structure (e.g., the diphenylphosphide anion).

The resulting diphosphine compounds are useful as bidentate ligands in combination with a wide variety of active metal species. For example, when employed in combination with rhodium, the bis-(dihydrocarbylphosphinomethyl)biaryl-type compounds prepared in accordance with the present invention are useful as components of low pressure hydroformylation processes. Such catalyst systems produce unusually high proportions of normal (or unbranched) aldehydes from a-olefins, e.g., n butyraldehyde from propylene.

## DETAILED DESCRIPTION OF THE INVENTION

In accordance with the present invention, there is provided a process for preparing a bidentate ligand of the formula:

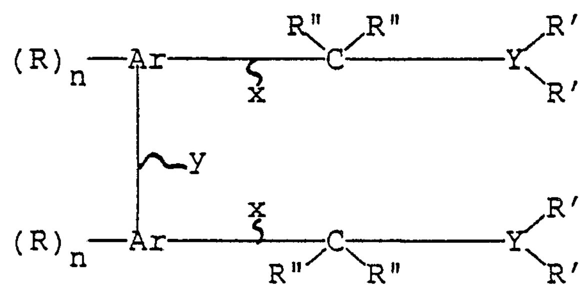

wherein:
each Ar is independently selected from aromatic ring compounds having 6 up to 14 carbon atoms, e.g., phenyl, naphthyl, phenanthryl and anthracenyl;
the x bonds and the y bonds are attached to adjacent carbon atoms on the ring structures;
each R, when present as a substituent, is independently selected from alkyl, alkoxy, aryloxy, aryl, aralkyl, alkaryl, alkoxyalkyl, aryloxyalkyl, cycloaliphatic, halogen, alkanoyl, aroyl, alkanoyloxy, aroyloxy, alkoxycarbonyl, aryloxy carbonyl, carboxyl, cyano, sulfonic acid or formyl radicals;
n is a whole number in the range of 0-4 where Ar is phenyl; 0-6 where Ar is naphthyl; and 0-8 where Ar is phenanthryl or anthracenyl;
each $R'$ is independently selected from alkyl, aryl, aralkyl, alkaryl or cycloaliphatic radicals, or substituted derivatives thereof wherein substituted derivatives include ethers, amines, amides, sulfonic acids, esters, hydroxyl groups and alkoxy groups;
each $R''$ is independently selected from hydrogen and the $R'$ substituents;
each of the above alkyl groups is straight or branched chain of 1-20 carbons;
each aryl group contains 6-10 ring carbons;
each cycloaliphatic group contains from 4-8 ring carbons; and
each Y is independently selected from the elements P, As, Sb and Bi.

The invention process comprises

a. reductively coupling an ortho-substituted aromatic moiety having the structure:

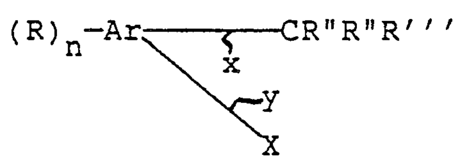

wherein:
the x bonds and the y bonds are attached to adjacent carbon atoms on the ring;
X is a halogen;
R, $R''$ and n are as defined above; and
$R'''$ is H or a functional group which can be converted into a group capable of being displaced by nucleophilic attack to produce a biaryl compound having the structure:

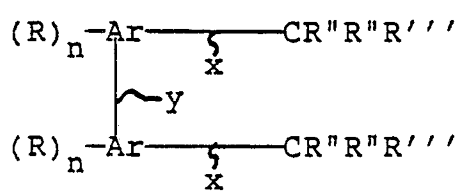

b. activating the benzylic carbon atom of said biaryl compound by conversion of $R'''$ to a functional group which is capable of displacement by nucleophilic substitution, thereby producing a functionally substituted biaryl compound;

c. contacting the functionally substituted biaryl compound produced in Step (b) with an anion having

the structure:

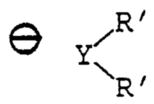

or

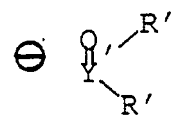

wherein $Y'$ is selected from the group consisting of P, As, Sb and Bi;
under conditions appropriate to form said bidentate ligand or the dioxide precursor thereof; and

d. optionally reducing the intermediate product when the oxy-anion,

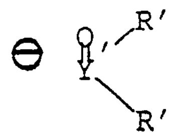

is employed as the anion in Step (c).

It is recognized, of course, that in order to obtain the desired bidentate ligand, the initially formed condensation product will require an additional reduction step when the oxygenated-Group V compound is employed as the source of the P, As, Sb or Bi moiety.

In an alternate embodiment of the present invention, bidentate ligand is prepared via a process comprising:

a. reductively coupling an ortho-substituted aromatic moiety having the structure:

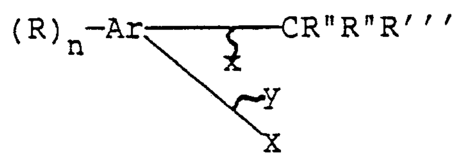

wherein:
the x bonds and the y bonds are attached to adjacent carbon atoms on the ring;
X is a halogen;
R, $R''$ and n are as defined above; and
$R'''$ is a group capable of being displaced by nucleophilic attack;
to produce a biaryl compound having the structure:

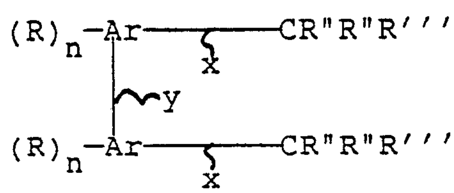

b. contacting the biphenyl compound produced in Step (a) with an anion having the structure:

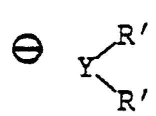

or

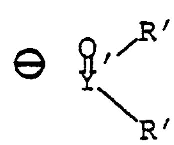

wherein $Y'$ is selected from the group consisting of P, As, Sb and Bi;
under conditions appropriate to form said bidentate ligand or the dioxide precursor thereof; and

c. optionally reducing the intermediate product when the oxy-anion,

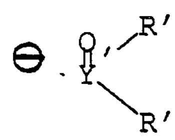

is employed as the anion in Step (b).

In a particular embodiment of the present invention, the bidentate ligands prepared in accordance with the invention process are compounds of the formula:

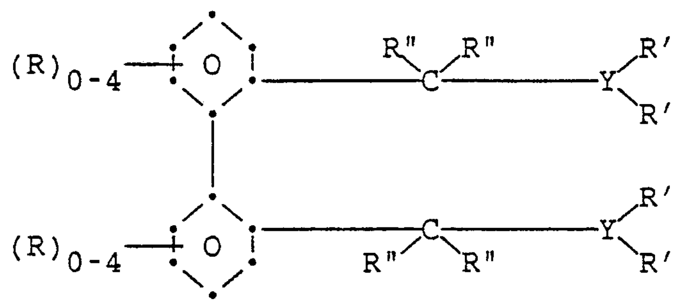

wherein:

each R is independently selected from alkyl, alkoxy, aryloxy, aryl, aralkyl, alkaryl, alkoxyalkyl, aryloxyalkyl, cycloaliphatic, halogen, alkanoyl, aroyl, alkanoyloxy, aroyloxy, alkoxycarbonyl, aryloxy carbonyl, cyano, carboxyl, sulfonic acid, or formyl radicals;

each $R'$ is independently selected from alkyl, aryl, aralkyl, alkaryl or cycloaliphatic radicals, or substituted derivatives thereof, wherein substituted derivatives include ethers, amines, amides, sulfonic acids, esters, hydroxyl groups and alkoxy groups;

each $R''$ is independently selected from hydrogen and the $R'$ substituents;

each of the above alkyl groups is straight or branched chain of 1-20 carbons, preferably 1-8 carbons, each aryl group contains 6-10 ring carbons, and each cycloaliphatic group contains from 4-8 ring carbons; and

each Y is independently selected from the elements P, As, Sb and Bi, with P being preferred.

In another particular embodiment of the present invention the bidentate ligands prepared in accordance with the invention process are compounds of the general formula:

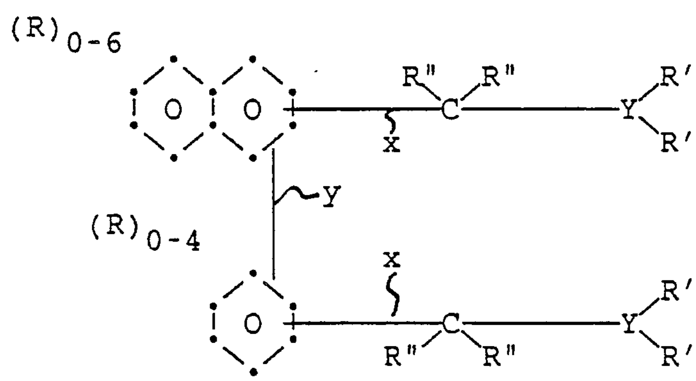

wherein:

the x bonds and the y bonds are attached to adjacent carbon atoms on the ring structures;

each R, when present as a substituent, is independently selected from alkyl, alkoxy, aryloxy, aryl, aralkyl, alkaryl, alkoxyalkyl, aryloxyalkyl, cycloaliphatic, halogen, alkanoyl, aroyl, alkanoyloxy, aroyloxy, alkoxycarbonyl, aryloxy carbonyl, cyano, carboxyl, sulfonic acid or formyl radicals;

each $R'$ is independently selected from alkyl, aryl, aralkyl, alkaryl or cycloaliphatic radicals, or substituted derivatives thereof, wherein substituted derivatives include ethers, amines, amides, sulfonic acids, esters, hydroxyl groups and alkoxy groups;

each $R''$ is independently selected from hydrogen and the $R'$ substituents;

each of the above alkyl groups is straight or branched chain of 1-20 carbons, preferably 1-8 carbons, each aryl group contains 6-10 ring carbons, and each cycloaliphatic group contains from 4-8 ring carbons; and

each Y is independently selected from the elements P, As, Sb and Bi, with P being preferred.

In yet another particular embodiment of the present invention, the bidentate ligands prepared in accordance with the invention process are compounds of the general formula:

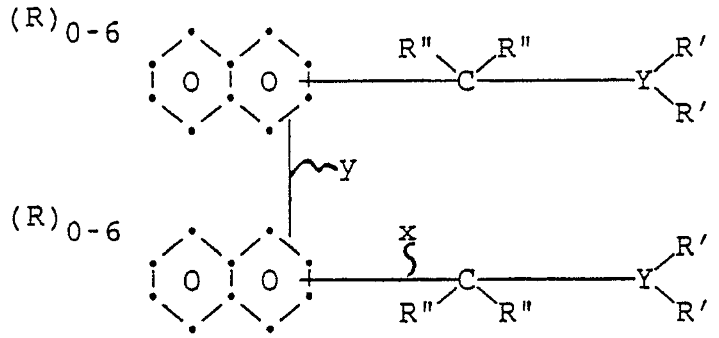

wherein:
the x bonds and the y bonds are attached to adjacent carbon atoms on the ring structure;
each R when present as a substituent is independently selected from alkyl, alkoxy, aryloxy, aryl, aralkyl, alkaryl, alkoxyalkyl, aryloxyalkyl, cycloaliphatic, halogen, alkanoyl, aroyl, alkanoyloxy, aroyloxy, alkoxycarbonyl, aryloxy carbonyl, cyano, carboxyl, sulfonic acid or formyl radicals;
each R′ is independently selected from alkyl, aryl, aralkyl, alkaryl or cycloaliphatic radicals, or substituted derivatives thereof, wherein substituted derivatives include ethers, amines, amides, sulfonic acids, esters, hydroxyl groups and alkoxy groups;
each R″ is independently selected from hydrogen and the R′ substituents;
each of the above alkyl groups is straight or branched chain of 1-20 carbons, preferably 1-8 carbons, each aryl group contains 6-10 ring carbons, and each cycloaliphatic group contains from 4-8 ring carbons; and
each Y is independently selected from the elements P, As, Sb and Bi, with P being preferred.

Especially preferred compounds which can be prepared in accordance with the invention process include:
2,2′-bis(diphenylphosphinomethyl)-1,1′-biphenyl (hereinafter, BISBI);
2,2′-bis(dibenzylphosphinomethyl)-1,1′-biphenyl;
2,2′-bis(phenylbenzylphosphinomethyl)-1,1′-biphenyl;
2,2′-bis(diisobutylphosphinomethyl)-1,1′-biphenyl;
2-(diphenylphosphinomethyl)-1-[2-(diphenyl phosphino-methyl)phenyl]naphthalene; and
2,2′-bis(diphenylphosphinomethyl)-1,1′- binaphthyl.

The biaryl compounds employed in the practice of the present invention can be prepared by a variety of synthetic routes known by those of skill in the art. For example, a reactant of the formula:

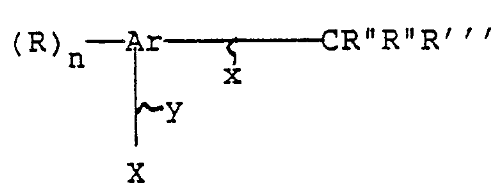

can be subjected to coupling conditions for a time suitable to produce the desired biaryl compound.

Exemplary aromatic reactants include
2-chlorotoluene,
2-bromotoluene,
2-iodotoluene,
2-chlorobenzylacetate,
2-bromobenzylacetate,
2-chlorobenzyl methyl ether,
2-bromobenzyl methyl ether,
2-chlorobenzyl ethyl ether,
2-bromobenzyl ethyl ether,
2-chlorobenzyl phenyl ether,

2-bromobenzyl phenyl ether,
bis(2-chlorobenzyl)ether,
bis(2-bromobenzyl)ether,
1-chloro-2-methylnaphthalene,
1-bromo-2-methylnaphthalene,
2-chloro-1-methylnaphthalene,
2-bromo-1-methylnaphthalene,
2-chloro-3-methylnaphthalene,
2-bromo-3-methylnaphthalene,
2-chlorobenzyl trifluoroacetate,
2-bromobenzyl trifluoroacetate,
and the like, as well as mixtures of any two or more thereof.

One such coupling reaction involves maintaining a redox reaction system comprising a reactant of the formula:

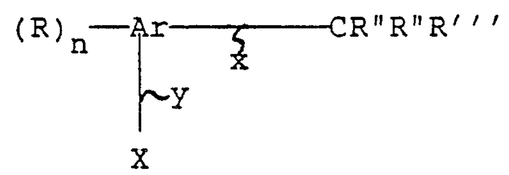

a polar, aprotic solvent, a nickel compound, a triorganophosphorus ligand, and a reducing agent at a temperature suitable for coupling for a time sufficient to form the desired biaryl compound.

Other coupling reactions include the nickel promoted coupling of aryl Grignard reagents; the nickel-phosphine complex catalyzed coupling of aryl Grignard reagents with aryl bromides and iodides; the dehalogenation of aryl bromides and iodides in the presence of highly activated Ni(O) powders; the reaction of aryl iodides with Cu(O) at elevated temperatures (e.g., 200 °C); the palladiumtriorganophosphine complex catalyzed coupling of aryl Grignard reagents with aryl halides; and the like.

The presently preferred method for the preparation of bis(alkyl substituted) biaryl compounds employed in the practice of the invention process is the coupling reaction first described above, i.e., the redox reaction system comprising an alkyl substituted aryl halide, a polar, aprotic solvent, a nickel compound, a triorganophosphorus ligand and a reducing agent.

This presently preferred reductive coupling reaction is generally carried out at a temperature in the range of about 30 °C up to 150 °C, preferably between about 50 °C up to about 90 °C.

Reaction pressure employed for this reductive coupling is not critical. Typically, this reaction is carried out at atmospheric pressure, although higher and lower pressures can be employed.

The reducing agent metal is generally present with respect to the nickel compound in a molar ratio in the range of about 5/1 up to 1,000/1, preferably in the range of about 10/1 up to 400/1, and most preferably from about 25/1 to about 100/1, although higher or lower ratios may be used. Very low ratios, however, will typically result in incomplete reaction and low yield.

It is also preferred that the ratio of polar, aprotic solvent (in mL) with respect to the reactant (aryl halide, in moles) be in the range of about 100/1 up to 10,000/1, and most preferably in the range of about 200/1 up to 2,000/1. The molar ratio of nickel compound with respect to the reactant (aryl halide) should be in range of about 1/100 up to 1/2, preferably in the range of about 1/40 up to 1/5, and most preferably in the range of about 1/30 up to 1/10. While higher or lower ratios may be used, there are no practical reasons therefor.

Solvents suitable for use in the practice of this preferred coupling reaction are polar (i.e., high dipole moment), aprotic solvents, such as, for example, N,N-dimethylformamide, N,N-dimethylacetamide, N-methyl-2-pyrrolidinone, N,N-dimethylbenzamide, N-methyl-2-piperidone, benzonitrile, tetramethylurea, hexamethylphosphoric triamide, and the like, as well as mixtures of any two or more thereof.

A wide range of nickel compounds are suitable for use in the practice of the presently preferred coupling reaction, so long as the nickel compounds employed are essentially water-free. The nickel(II) halide salts are a convenient source of nickel as such compounds are readily available in anhydrous form; or hydrated forms of nickel(II) halide salts can be employed, with a dehydration step by such well known techniques as azeotropic distillation being employed to remove the water of hydration. Those of skill in the art recognize that a wide variety of other nickel compounds can be used, e.g., nickel nitrates, sulfates, phosphates, oxides, carbonates, carboxylates, acetylacetonate and the like, as well as Ni(O) complexes such as, for example, bis(1,5cyclooctadienyl)nickel(O), nickel(O) tetracarbonyl, and the like.

The nickel(II) halides are presently preferred because of their ready availability in anhydrous form, and because the presence of halides in the reaction mixture appears to promote the coupling reaction.

When halide-free nickel compounds are employed, it may be desirable to provide a source of halide to the reaction mixture. A convenient supplemental source of halide is an alkali metal halide, preferably as the sodium or potassium halide. Up to about 200 moles of halide per mole of nickel will impart a beneficial effect on the coupling reaction, with about 10 up to 80 moles of halide per mole of nickel being preferred. In a most preferred embodiment, about 20 up to 50 moles of halide per mole of nickel will be added to the coupling reaction mixture.

A wide range of organophosphorus ligands having the structure $PR'_3$ (wherein each $R'$ is selected independently of one another, and each $R'$ is as defined above) are useful in this coupling reaction. Exemplary compounds include triarylphosphines such as triphenylphosphine; alkyl or substituted alkyl diphenylphosphines, such as butyldiphenylphosphine, diphenyl-2-(N-ethylpyrrolidono)phosphine; alkoxy-substituted diphenylalkylphosphines such as diphenyl-(2-methoxyethoxy ethyl)phosphine and diphenyl-(2-ethoxyethyl)phosphine; and the like. In addition, bidentate ligands such as 2,2′-bipyridine, 1,10-phenanthroline, 1,8-naphthyridine [i.e., 1,8-diazanaphthalene), 2-(dimethylamino)pyridine, and the like, can be employed.

The reducing agent employed in the preferred coupling process will have a sufficient reducing potential to promote the reduction of Ni(II) to Ni(O). Thus, any element with an electromotive force (EMF) more negative than -0.25 V (relative to hydrogen) could be employed. Elements which satisfy this criterion include calcium, zinc, magnesium, manganese, sodium and lithium. Presently preferred elements are zinc, magnesium and manganese.

While the reducing agent employed in the presently preferred coupling process is preferably internal to the reaction system, those of skill in the art recognize that the known external reducing agent, an electrochemical cell, can also be used. See, for example, Amatore and Jutand in Organometallics, Vol. 7, pp 2203-2214, 1988. In such a system, conventional E.M.F. values for the particular concentrations of the aryl halide reactant to be coupled, nickel compound and electrolyte, e.g., tetrabutylphosphonium bromide, lithium bromide, etc., can be employed. The determinations of such E.M.F., component concentrations, bath size and the like can readily be carried out by those skilled in the art.

A typical useful electrochemical cell is Ni | $Ni^{2+}$ $Zn^{2+}$ | Zn. Undivided cells may also be used. In carrying out such an electrochemical reaction in the laboratory, the following parameters are exemplary for coupling 2-halotoluenes.

| | |
|---|---|
| Bath size | 1.0 L |
| Dimethylformamide | 500 mL |
| 2-Halotoluene | 0.4 moles |
| $NiCl_2$ | 0.02 moles |
| LiBr | 0.3 N |
| E.M.F. | -1.5 volts (relative to the Saturated Calomel Electrode) |

It is preferred to agitate the bath in known manner and to maintain the electrochemical reaction mixture at a temperature suitable for producing the coupled product. The temperature of the electrochemical reaction mixture is preferably maintained in the range of about 30°C to 150°C, and most preferably in the range of about 50°C up to 90°C.

In the reductive coupling reaction, the solvent employed is preferably dimethylformamide or dimethylacetamide, or mixtures thereof; the nickel compound employed is preferably nickel chloride or nickel bromide, or mixtures thereof; the stabilizing ligand is a triorganophosphine; and the reducing metal employed is preferably finely divided, preferably powdered, zinc, magnesium or manganese, or mixtures of two or more thereof.

During the reductive coupling reaction, the concentrations of the various reactant materials and their ratios as set forth above will necessarily change and it is preferred for continuous operations that their concentrations be maintained at least within the specified broad ranges by addition of these reactants to the reaction system as is necessary.

It is also noted with respect to the above stated reaction conditions, that the temperatures employed will be dictated to a degree by the particular reactants employed, and also by the size and design of the equipment. For example, the thermal stability of these materials must be considered and any exothermic reaction controlled to prevent degradation or excessive side reactions. The pressure of the reductive

coupling reaction systems need only be ambient, and lower or higher pressures give no significant enhancement to the reaction and typically are not warranted.

In regard to the isolation and work up of the coupled product, the procedure generally involves the following sequence of steps: aqueous quench, filtration, aqueous washes, and distillation. Alternatively, concentration, recrystallization, and the like are acceptable.

Where R‴ is not directly susceptible to nucleophilic displacement, the next step of the invention process involves "activating" the benzylic carbon atom towards nucleophilic substitution. This typically involves converting the biaryl compound having the structure:

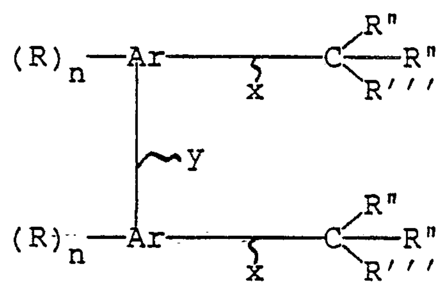

into a difunctional biaryl derivative having the structure:

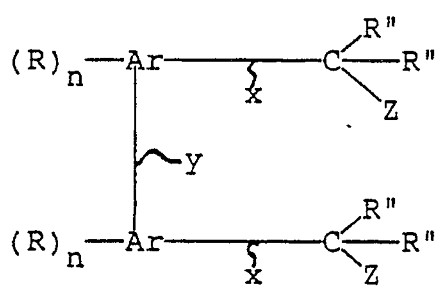

wherein the functional groups, Z, are good leaving groups under nucleophilic reaction conditions. Exemplary functional groups which are good leaving groups under nucleophilic reaction conditions include

- X, wherein X is a halide,
- tosylate,
- mesylate,
- brosylate,
- alkoxy having 1 up to 10 carbon atoms,
- aryloxy having 6 up to 12 carbon atoms,
- -OZ′, wherein Z, is an acyl group having in the range of 1 up to 10 carbon atoms,
- trifluoracetate,

and the like. Thus, R‴ of the biaryl compound can be replaced with halogens, tosylates, brosylates, triflates, mesylates, trifluoroacetate, -OZ′, wherein Z′ is selected from alkyl, aryl, aralkyl, alkaryl, alkanoyl, aroyl or cycloaliphatic radicals or substituted derivatives thereof; and the like.

Those of skill in the art have available numerous reagents which can suitably be employed for the desired activation of the benzylic carbon atom. Thus, when R‴ is H, bromine, chlorine, N-bromosuccinimide, and the like can be employed. Elemental bromine is the presently preferred reagent when R‴ is H.

Alternatively, when R‴ is -OH, halogenating agents such as aqueous hydrobromic acid, anhydrous hydrogen bromide, thionyl chloride, phosphorus trihalides (e.g., $PBr_3$), $Ph_3P$-$Br_2$, $Ph_3P$-$CBr_4$, $Ph_3P$-$CCl_4$, perhalogenated metal compounds (e.g., $SnBr_4$, $TiCl_4$), $PCl_5$, and the like can be employed. As yet another alternative, the benzylic carbon of the biaryl compound can be activated by reacting the biaryl compound in the presence of base with para-toluenesulfonyl chloride (to form the tosylate), with methanesulfonyl chloride (to form the mesylate), with trifluoromethanesulfonyl chloride or trifluoromethanesulfonic anhydride (to form the triflate), with methyl iodide, dimethyl sulfate or other alkylating agents (to form an alkyl ether), with acetyl chloride, acetic anhydride, trifluoroacetic anhydride, and the like (to form an ester), and the like. Presently preferred activating agents when R‴ is -OH are thionyl chloride and phosphorus tribromide, as these reagents are readily available, relatively inexpensive, and give excellent conversion of biaryl compound to the activated compound.

The temperature at which the activation of the benzylic carbon atom can be carried out can vary widely. Temperatures as low as about -80° up to about 150°C can be employed. Preferably, temperatures in the range of about -20 up to 100°C are employed, with temperatures in the range of about -10 up to 40°C most preferred.

The conversion of the "activated" difunctional biaryl compound to the desired bidentate ligand is carried out by contacting the activated compound with an anion of the formula:

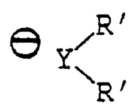

or

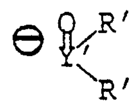

where $Y'$ is selected from the group consisting of P, As, Sb and Bi; and Y and $R'$ are as defined above.

It is recognized, of course, that in order to obtain the desired bidentate ligand, the initially formed condensation product will require an additional reduction step when the oxy-anion is employed as the source of the P, As, Sb or Bi moiety.

The above anions can be associated with a variety of cations, and are typically derived from compounds having the structure:

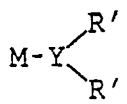

or

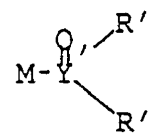

wherein M is selected from the group consisting of alkali metals, alkaline earth metals, and quaternary ammonium compounds;
and wherein Y, $Y'$ and $R'$ are as defined above. Most commonly, M will be an alkali metal which was employed for the preparation of the anion. For example, the diphenylphosphide anion can be prepared by treating diphenylphosphine with n-butyllithium in ether or THF. Since the resulting anion is a brightly colored species (yellow in ether and orange in THF), the disappearance of color, or a change in the color of the reaction mixture can frequently be used as an indicator of the progress of the activated difunctional biaryl compound/anion reaction.

An alternate method for the preparation of lithio diphenylphosphine anion is to prepare and use the anion in-situ by means of the reductive cleavage of triphenylphosphine to phenyl lithium and the desired diphenylphosphine anion. The phenyllithium which is produced should preferably be quenched prior to the addition of the activated difunctional biaryl compound to the solution. The most effective means to quench the reaction is the addition of an equivalent amount of tertiary butyl chloride, which undergoes a dehydrohalogenation reaction to give benzene, lithium chloride, and isobutylene.

Suitable temperatures for reaction between the activated difunctional biaryl compound and the above described anion can vary over a wide range. Typically, temperatures in the range of about -80° up to 150°C will be employed. Preferably, temperatures in the range of about -10° up to 100°C will be employed, with temperatures in the range of about 10° up to 60°C being most preferred, because acceptable reaction rates are obtained at such temperatures while the formation of by-products is minimized.

The ratio of anion to difunctional biaryl compound employed will vary in the range of about 1.5:1 up to about 4:1. The use of even lower ratios is undesirable as the presence of significant quantities of unreacted starting material difunctional biaryl compound could lead to the formation of quaternary salts whose presence in the reaction mixture is undesirable. On the other hand, the use of substantially greater amounts than the 4:1 ratio recited above will simply produce large quantities of the reduced anion which would need to be recovered and disposed of or recycled as appropriate. Consequently, preferred ratios of anion to activated difunctional biaryl compound fall within the range of 1.9:1 up to 2.5:1, with ratios in the range of 2.0:1 up to 2.2:1 being most preferred.

In order to minimize the occurrence of side reactions, it is preferred that the activated difunctional biaryl compound be added to a solution containing the anion. The reverse order of addition is less desirable because such mode of addition would lead to the formation of significant quantities of quaternary compounds.

The reaction between activated difunctional biaryl compound and anion can be carried out in a wide

range of solvents, such as for example, ethers (e.g., tetrahydrofuran, diethylether, and the like), aprotic solvents (such as, for example, the glymes, e.g., diglyme, triglyme, and the like; saturated hydrocarbons, such as pentane, hexane, heptane, and the like; aromatic hydrocarbon solvents, e.g., benzene, toluene, xylene, and the like).

As well known by those of skill in the art, it is preferred that all manipulations involving Group VA compounds (i.e., compounds of P, As, Sb and Bi), especially compounds of phosphorus, be carried out under an inert atmosphere, e.g., $N_2$, Ar, etc.

It is particularly noted that during the above reactions, the concentrations of the various reactant materials and their ratios as set forth above will necessarily change and it is preferred for any continuous process involving these reactions that the concentrations be maintained at least within the specified broad ranges by addition of reactants to the reaction mixture as is necessary.

It is also noted with respect to the above stated reaction conditions, that the temperatures employed for any step will be dictated to a degree by the particular reactants employed, and also by the size and design of the equipment. For example, the thermal stability of the particular materials in the reaction mixture must be considered and any exothermic reaction controlled to prevent degradation or excessive side reactions. The reaction pressures for all conversion steps described herein need only be ambient. Lower or higher pressures give no significant enhancement to the reactions and typically are not warranted, except for such reactions as $H_2$ reduction with which pressure may desirably be employed.

In regard to the isolation and work-up of the various intermediate products, as well as the desired bidentate ligand product, the procedure generally involves such steps as distillation, solvent wash and extraction, recrystallization, filtering, aqueous washing and drying under vacuum. It is particularly noted however, that for the present materials, work-up presents no difficulty and the target products are readily obtained in good yield and excellent purity.

The following non-limiting examples will further illustrate the present invention:

## EXAMPLE 1 - The Preparation of 2,2′-Dimethyl-1,1′-Biphenyl

To a 2-liter resin kettle equipped with a cooling coil (3 foot by 1/4 inch 316 stainless steel), thermometer, heating jacket, Dean-Stark trap, an efficient stirrer, and a condenser was added nickel chloride hexahydrate (35.6 grams, 0.15 mole), triphenylphosphine (120 grams, 0.458 mole), dimethylformamide (600 mL) and toluene (200 mL). The mixture was heated to reflux and the water was collected in the Dean-Stark trap and removed. The reflux conditions were maintained until the evolution of water ceased. At this time, the Dean-Stark trap was drained repeatedly to remove most of the toluene. The catalyst solution was then allowed to cool to ambient temperature and the Dean-Stark trap removed.

Zinc powder (-325 mesh, 260 grams, 3.97 moles) was washed under nitrogen with 2 percent aqueous HCl (2 x 200 mL), water (2 x 200 mL), absolute ethanol (2 x 100 mL), and diethyl ether (2 x 150 mL). The powder was dried by pulling dry nitrogen through the filter cake. The dry zinc powder and sodium bromide (45 grams) were then added to the resin kettle containing the remainder of the catalyst components whereupon the color of the mixture changed from a deep blue to a reddish brown indicating the presence of nickel(0) species.

An alternative procedure to the above is to prepare the homogenous catalyst in a separate flask and then add it to the zinc and sodium bromide in the resin kettle. This alternative procedure is often easier to perform on a laboratory scale.

2-Chlorotoluene (385 grams, 3 moles) was placed in an addition funnel and attached to the resin kettle. Chlorotoluene (50 mL) was added to the kettle and the mixture stirred and heated (30 pound steam in coil and heating jacket) up to about 80° C. The reaction mixture was held at 80° C by the addition of water to the steam with the mixing of the two being controlled by a temperature controller. In practice, the temperature of the contents of the reaction varied between 78.5° and 81° C. The remainder of the 2-chlorotoluene was added rapidly dropwise over a 30-minute period and the reaction mixture held at 80° C with good stirring for 14 hours. The reaction mixture was cooled to ambient whereupon the liquid separated into two phases with the excess zinc precipitated in the bottom of the kettle. Heptane (100 mL) was added, the layers mixed, allowed to reseparate, and the top layer was siphoned off into a separatory funnel. The addition of heptane, mixing, and separation was repeated three additional times and the combined heptane layers were then washed with water (2 x 400 mL), and distilled to give the product. The heptane was removed through a twenty-five tray Oldershaw column at atmospheric pressure (under nitrogen) and the final distillation was done at 25 mm Hg through a ten floating ball Snyder column to give:
2-chlorotoluene 20.15 grams recovered (5.23 percent of starting charge)

2,2′-dimethyl-1,1′-biphenyl 241.4 grams (88.4 percent of theory) boiling point 139° to 140° C at 25 mm Hg 1H NMR resonances at 1.89 (s, 6 H) and 6.79 (broad s, 8H)

Overall, the reaction showed 94.7 percent conversion of 2-chlorotoluene with a 93.4 percent selectivity for 2,2′-dimethyl-1,1′-biphenyl.

EXAMPLE 2 - The Preparation of 2,2′-Bis(bromomethyl)-1,1′-Biphenyl

To a 1-liter, three-necked flask equipped with two addition funnels and a reflux condenser was added 2,2′-dimethyl-1,1′-biphenyl (109 grams, 0.6 mole) and 1,1,2-trichlorotrifluoroethane (150 mL). The mixture was stirred and heated to reflux. A solution of benzoyl peroxide (3.6 grams in 25 mL of chlorobenzene) and a solution of bromine (207.3 grams, 1.30 moles) in 1,1,2-trichlorotrifluoroethane (60 mL) were added simultaneously in eight portions over a 5-hour period at reflux. Hydrogen bromide was evolved and purged from the reaction off of the top of condenser. The refluxing solvent was used to scrub the bromine vapors out of the vapor stream to reduce elemental bromine losses. When the color of the bromine was essentially gone, the reaction mixture was allowed to cool and the product crystallized out as a white powder. The product was filtered, washed with ice cold hexane (30 mL) and dried by pulling dry nitrogen through the filter cake. The isolated product weighed 146.43 grams (72 percent of theory). No effort was made to isolate a second crop of crystals. The product is an air stable white powder with strong skin irritant properties. The physical and spectroscopic properties of the product were found to be in complete agreement with those previously reported.

EXAMPLE 3 - The Preparation of BISBI from 2,2′-Bis-(bromomethyl)-1,1′Biphenyl

To a 5-liter flask equipped with mechanical stirrer, temperature controller, addition funnel, and condenser was added triphenylphosphine (167.7 grams, 0.640 mole), tetrahydrofuran (THF; 550 mL), and lithium wire (8.88 grams, 1.28 mole). The flask and its contents were cooled by external cooling to maintain an internal temperature of 15° to 25° C. The reaction mixture was then stirred overnight which resulted in the dissolution of nearly all of the lithium. The flask and its contents were cooled to 10° C and t-butyl chloride (56.2 grams, 0.608 mole) was added over a 1-hour period while the temperature was held below 30° C with a water bath. Upon completion of the addition, the reaction mixture was heated to 40° C for 10 minutes and then cooled to 10° C. 2,2-Bis(bromomethyl)-1,1′-biphenyl (100.5 grams, 0.295 mole) in THF (150 mL) was added dropwise to the solution of the resulting anion. The solution was heated at reflux for 0.5 hour upon completion of the addition. The reaction mixture was cooled to ambient, quenched with methanol (40 mL), and diluted with toluene (300 mL). The apparatus was equipped for distillation and 0.9 liter of the reaction solvent was removed. The base temperature rose to 100° C and was cooled back to 60° C. The organic solution was water washed (3 x 400 mL) at 50° to 60° C and then the residual water was removed by azeotropic distillation which also removed 100 mL of toluene. The product was isolated by the addition of isopropyl alcohol (1,500 mL) and allowing the slow overnight formation of the crystalline product. The product was filtered under a nitrogen atmosphere to give 122.5 grams (75.5 percent based on dibromide) of BISBI as a white powder.

The invention has been described in detail with particular reference to preferred embodiments thereof, but it will be understood that variations and modifications can be effected within the spirit and scope of the invention.

## Claims

1. A process for preparing a bidentate ligand having the structure:

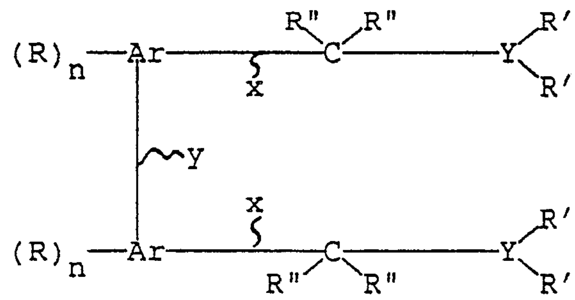

wherein:
each Ar is independently selected from aromatic ring compounds having 6 up to 14 carbon atoms;
the x bonds and the y bonds are attached to adjacent carbon atoms on the ring structures;
each R, when present as a substituent, is independently selected from alkyl, alkoxy, aryloxy, aryl, aralkyl, alkaryl, alkoxyalkyl, aryloxyalkyl, cycloaliphatic, halogen, alkanoyl, aroyl, alkanoyloxy, aroyloxy, alkoxycarbonyl, aryloxy carbonyl, carboxyl, cyano, sulfonic acid or formyl radicals;
n is a whole number in the range of 0-4 where Ar is phenyl; 0-6 where Ar is naphthyl; and 0-8 where Ar is phenanthryl or anthracenyl;
each $R'$ is independently selected from alkyl, aryl, aralkyl, alkaryl or cycloaliphatic radicals, or substituted derivatives thereof wherein substituted derivatives include ethers, amines, amides, sulfonic acids, esters, hydroxyl groups and alkoxy groups;
each $R''$ is independently selected from hydrogen and the $R'$ substituents;
each of the above alkyl groups is straight or branched chain of 1-20 carbons;
each aryl group contains 6-10 ring carbons;
each cycloaliphatic group contains from 4-8 ring carbons; and
each Y is independently selected from the elements P, As, Sb and Bi;
said process comprising:

a. reductively coupling an ortho-substituted aromatic moiety having the structure:

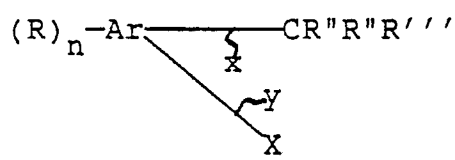

wherein:
the x bonds and the y bonds are attached to adjacent carbon atoms on the ring;
X is a halogen;
R and n are as defined above; and
$R'''$ is H or a functional group which can be converted into a group capable of being displaced by nucleophilic attack;
to produce a biaryl compound having the structure:

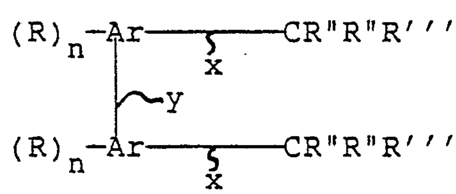

b. activating the benzylic carbon atom of said biaryl compound by conversion of $R'''$ to a functional group, Z, which is capable of displacement by nucleophilic substitution, thereby producing a functionally substituted biaryl compound;

c. contacting the functionally substituted biaryl compound produced in Step (b) with an anion having the structure:

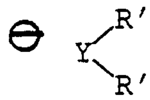 or 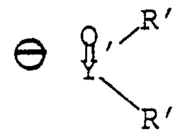

wherein Y′ is selected from the group consisting of P, As, Sb and Bi; under conditions appropriate to form said bidentate ligand or the dioxide precursor thereof; and

d. optionally reducing the intermediate product when the oxy-anion,

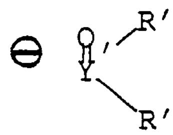

is employed as the anion in Step (c).

2. A process in accordance with Claim 1 wherein Z is selected from the group consisting of:
- X, wherein X is a halide,
- tosylate,
- mesylate,
- brosylate,
- alkoxy having 1 up to 10 carbon atoms,
- aryloxy having 6 up to 12 carbon atoms,
- -OZ′, wherein Z′ is an acyl group having in the range of 1 up to 10 carbon atoms, and
- trifluoracetate.

3. A process in accordance with Claim 1 wherein said ortho-substituted aromatic moiety is selected from the group consisting of:
2-chlorotoluene,
2-bromotoluene,
2-iodotoluene,
2-chlorobenzylacetate,
2-bromobenzylacetate,
2-chlorobenzyl methyl ether,
2-bromobenzyl methyl ether,
2-chlorobenzyl ethyl ether,
2-bromobenzyl ethyl ether,
2-chlorobenzyl phenyl ether,
2-bromobenzyl phenyl ether,
bis(2-chlorobenzyl)ether,
bis(2-bromobenzyl)ether,
1-chloro-2-methylnaphthalene,
1-bromo-2-methylnaphthalene,
2-chloro-1-methylnaphthalene,
2-bromo-1-methylnaphthalene,
2-chloro-3-methylnaphthalene,
2-bromo-3-methylnaphthalene,
2-chlorobenzyl trifluoroacetate, and
2-bromobenzyl trifluoroacetate,
as well as mixtures of any two or more thereof.

4. A process in accordance with Claim 1 wherein said ortho-substituted aromatic moiety is 2-chlorotoluene.

5. A process in accordance with Claim 1 wherein said reductive coupling is promoted by a catalyst system comprising:

(a) nickel compound,
(b) reducing agent,
(c) a triorganophosphorus ligand, and
(d) a polar, aprotic solvent.

6. A process in accordance with Claim 5 wherein said triorganophosphorus ligand has the structure

$PR'_3$, wherein each R′ is selected independently of one another and each R′ is as defined above, as well as mixtures of any two or more thereof.

7. A process in accordance with Claim 5 wherein said nickel compound is a nickel halide; wherein said reducing agent is selected from the group consisting of Mg(0), Zn(0) and Mn(0); and the polar, aprotic solvent is selected from the group consisting of:
N,N-dimethylformamide,
N,N-dimethylacetamide,
N-methyl-2-pyrrolidinone,
N,N-dimethylbenzamide,
N-methyl-2-piperidone,
benzonitrile,
tetramethylurea,
hexamethylphosphoric triamide,
as well as mixtures of any two or more thereof.

8. A process in accordance with Claim 5 wherein said reductive coupling is carried out at a temperature in the range of 30° up to 150°C, for a time sufficient to achieve substantially complete conversion of starting orthosubstituted aromatic moiety.

9. A process in accordance with Claim 1 wherein R‴ is H, and the activation of the benzylic carbon atom is promoted by subjecting said compound to radical initiators in the presence of halogenating agents.

10. A process in accordance with Claim 9 wherein said activation is carried out at a temperature in the range of about -10° up to 80°C, for a time sufficient to achieve substantially complete conversion of starting biaryl compound.

11. A process in accordance with Claim 1 wherein said anion is derived from a compound having the structure:

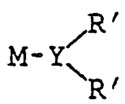

or

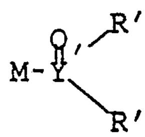

wherein M is selected from the group consisting of alkali metals, alkaline earth metals, and quaternary ammonium compounds;
wherein Y and R′ are as defined above; and wherein Y′ is selected from the group consisting of P, As, Sb and Bi.

12. A process in accordance with Claim 11 wherein the molar ratio of anion to functionally substituted biaryl compound falls within the range of about 1/1 up to 20/1.

13. A process in accordance with Claim 12 wherein the contacting of said anion and said functionally substituted biaryl compound is carried out at a temperature in the range of about -80° up to 100°C for a time in the range of about 0.1 up to 40 hours.

14. A process in accordance with Claim 11 wherein said anion is the diphenylphosphide anion.

15. A process for preparing a bidentate ligand having the structure:

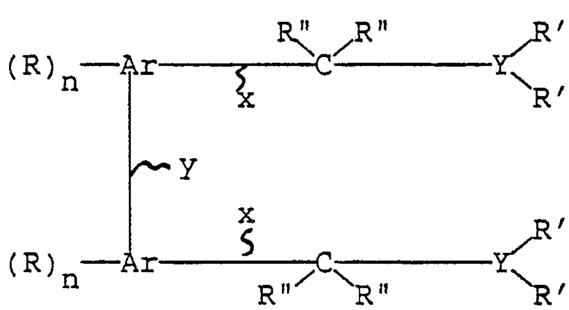

wherein:
each Ar is independently selected from aromatic ring compounds having 6 up to 14 carbon atoms;
the x bonds and the y bonds are attached to adjacent carbon atoms on the ring structures;
each R, when present as a substituent, is independently selected from alkyl, alkoxy, aryloxy, aryl, aralkyl, alkaryl, alkoxyalkyl, aryloxyalkyl, cycloaliphatic, halogen, alkanoyl, aroyl, alkanoyloxy, aroyloxy, alkoxycarbonyl, aryloxy carbonyl, carboxyl, cyano, sulfonic acid or formyl radicals;
n is a whole number in the range of 0-4 where Ar is phenyl: 0-6 where Ar is naphthyl: and 0-8 where Ar is phenanthryl or anthracenyl;
each $R'$ is independently selected from alkyl, aryl, aralkyl, alkaryl or cycloaliphatic radicals, or substituted derivatives thereof wherein substituted derivatives include ethers, amines, amides, sulfonic acids, esters, hydroxyl groups and alkoxy groups;
each $R''$ is independently selected from hydrogen and the $R'$ substituents;
each of the above alkyl groups is straight or branched chain of 1-20 carbons; each aryl group contains 6-10 ring carbons;
each cycloaliphatic group contains from 4-8 ring carbons; and
each Y is independently selected from the elements P, As, Sb and Bi;
said process comprising:

a. reductively coupling an ortho-substituted aromatic moiety having the structure:

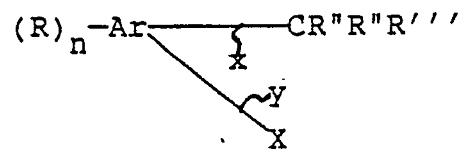

wherein:
the x bonds and the y bonds are attached to adjacent carbon atoms on the ring;
X is a halogen;
R, $R''$ and n are as defined above; and
$R'''$ is a group capable of being displaced by nucleophilic attack;
to produce a biaryl compound having the structure:

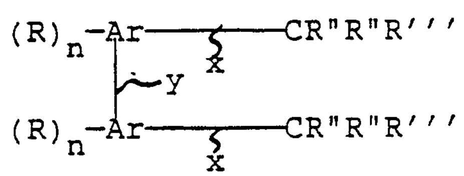

b. contacting the biphenyl compound produced in Step (a) with an anion having the structure:

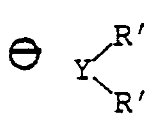

or

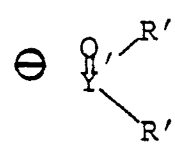

wherein $Y'$ is selected from the group consisting of P, As, Sb and Bi;
under conditions appropriate to form said bidentate ligand or the dioxide precursor thereof; and

c. optionally reducing the intermediate product when the oxy-anion,

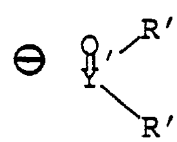

is employed as the anion in Step (b).

16. A process in accordance with Claim 15 wherein $R'''$ is selected from the group consisting of:
- X, wherein X is a halide,
- tosylate,
- mesylate,
- brosylate,

- alkoxy having 1 up to 10 carbon atoms,
- aryloxy having 6 up to 12 carbon atoms,
- -$OZ'$, wherein $Z'$ is an acyl group having in the range of 1 up to 10 carbon atoms, and
- trifluoroacetate.

17. A process in accordance with Claim 15 wherein said ortho-substituted aromatic moiety is selected from the group consisting of:
2-chlorobenzylacetate,
2-bromobenzylacetate,
2-chlorobenzyl methyl ether,
2-bromobenzyl methyl ether,
2-chlorobenzyl ethyl ether,
2-bromobenzyl ethyl ether,
2-chlorobenzyl phenyl ether,
2-bromobenzyl phenyl ether,
bis(2-chlorobenzyl)ether,
bis(2-bromobenzyl)ether,
2-chlorobenzyl trifluoroacetate, and
2-bromobenzyl trifluoroacetate,
as well as mixtures of any two or more thereof.

18. A process in accordance with Claim 15 wherein said reductive coupling is promoted by a catalyst system comprising:
(a) a nickel compound,
(b) a reducing agent,
(c) a triorganophosphorus ligand, and
(d) a polar, aprotic solvent.

19. A process in accordance with Claim 18 wherein said triorganophosphorus ligand has the structure $PR'_3$, wherein each $R'$ is selected independently of one another, and each $R'$ is as defined above, as well as mixtures of any two or more thereof.

20. A process in accordance with Claim 15 wherein said nickel compound is a nickel halide; wherein said reducing agent is selected from the group consisting of Mg(0), Zn(0) and Mn(0); and the polar, aprotic solvent is selected from the group consisting of:
N,N-dimethylformamide,
N,N-dimethylacetamide,
N-methyl-2-pyrrolidinone,
N,N-dimethylbenzamide
N-methyl-2-piperidone,
benzonitrile,
tetramethylurea, and
hexamethylphosphoric triamide,
as well as mixtures of any two or more thereof.

21. A process in accordance with Claim 15 wherein said reductive coupling is carried out at a temperature in the range of 30° up to 150° C, for a time sufficient to achieve substantially complete conversion of starting orthosubstituted aromatic moiety.

22. A process in accordance with Claim 15 wherein said anion is derived from a compound having the structure:

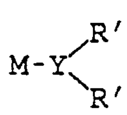

or

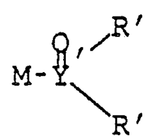

wherein M is selected from the group consisting of alkali metals, alkaline earth metals, and quaternary ammonium compounds; and
wherein Y and $R'$ are as defined above; and wherein $Y'$ is selected from the group consisting of P, As, Sb and Bi.

23. A process in accordance with Claim 15 wherein the molar ratio of anion to biphenyl compound falls within the range of about 1/1 up to 20/1.

24. A process in accordance with Claim 23 wherein the contacting of said anion and said biaryl compound is carried out at a temperature in the range of about -80° up to 100° C for a time in the range of about 0.1 up to 40 hours.

25. A process in accordance with Claim 15 wherein said anion is the diphenylphosphide anion.

European Patent Office

# EUROPEAN SEARCH REPORT

Application Number

EP 89 42 0509

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | JOURNAL OF SYNTHETIC METHODS, vol. 12, no. 1, 1986, abstract no. 75142B, London, GB; T.-S. CHOU et al.: "Tert. phosphines from tert. phenylphosphines via lithium diorganophosphides ultrasonication" * Abstract * | 1-8,11-25 | C 07 F 9/50<br>C 07 F 9/92<br>C 07 F 9/94<br>C 07 F 9/74 |
| Y | CHEMICAL ABSTRACTS, vol. 91, 1979, page 792, abstract no. 91764v, Columbus, Ohio, US; & JP-A-79 39 059 (NITTO RIKEN INDUSTRIES, INC.) 24-03-1979 * Abstract * | 1-8,11-25 | |
| Y | BULL. CHEM. SOC. JPN., vol. 53, 1980, pages 3691-3695, The Chemical Society of Japan; K. TAKAGI et al.: "The in Situ-generated nickel(0)-catalyzed reaction of aryl halides with potassium iodide and zinc powder" * The whole article * | 1-8,11-25 | TECHNICAL FIELDS SEARCHED (Int. Cl.5) |
| A | WO-A-8 707 600 (KODAK) * Examples 1-11; claims * | 1-25 | C 07 F 9/00 |
| P,Y | WO-A-8 904 315 (EASTMAN KODAK CO.) * Entire document * | 1-25 | |

The present search report has been drawn up for all claims

| Place of search | Date of completion of the search | Examiner |
|---|---|---|
| THE HAGUE | 12-03-1990 | OUSSET J-B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)